# EUROPÄISCHE PATENTSCHRIFT

(11) **EP 3 741 635 B1**
(45) Veröffentlichungstag und Bekanntmachung des Hinweises auf die Patenterteilung: **10.08.2022**
(21) Anmeldenummer: 20173197.3
(22) Anmeldetag: 06.05.2020
(51) Int. Cl.: B60T 13/74

(54) **BREMSSTEUERSYSTEM**
BRAKE CONTROL SYSTEM
SYSTÈME DE COMMANDE DE FREIN

(30) Priorität: 22.05.2019 DE 102019207517
(43) Veröffentlichungstag der Anmeldung: 25.11.2020
(73) Patentinhaber: Volkswagen Aktiengesellschaft, 38440 Wolfsburg (DE)
(72) Erfinder: Bartels, Arne, 38448 Wolfsburg (DE)

(56) Entgegenhaltungen:
- EP-A1- 3 418 144
- CN-A- 109 677 388
- DE-A1-102004 058 996
- DE-A1-102016 012 530
- DE-A1-102017 003 654
- US-A1- 2005 228 546
- US-A1- 2015 291 279
- US-A1- 2017 210 361

## Beschreibung

Die vorliegende Erfindung betrifft ein Bremssteuersystem für ein Kraftfahrzeug, aufweisend ein erstes Steuergerät zur Steuerung eines ersten Bremsaktuators des Kraftfahrzeugs und ein zweites Steuergerät zur Steuerung eines zweiten Bremsaktuators des Kraftfahrzeugs. Die Erfindung betrifft außerdem ein entsprechendes Kraftfahrzeug.

Bekannte Bremssteuersysteme für teilautomatisiertes Fahren, insbesondere gemäß Level 3 nach der SAE-J3016-Klassifizierung, sind beispielsweise für eine kurze Zeit fehlertolerant ausgelegt, sodass es bei einem betriebsrelevanten Defekt im Bremssteuersystem für etwa 30 Sekunden einsatzfähig bleibt, also "fail-operational" ist. Diese Zeit wird beispielsweise dazu genutzt, den Fahrer zur Übernahme der Steuerung aufzufordern, und, wenn er dies nicht innerhalb von beispielsweise 10 Sekunden tut, das Fahrzeug innerhalb von beispielsweise 20 Sekunden automatisiert bis zum Stillstand zu bremsen.

Solche bekannten Bremssteuersysteme können einfach redundant ausgelegt sein. Das heißt, betriebsrelevante Komponenten des Bremssteuersystems, die nicht ausreichend betriebsbewährt sind und potentiell ausfallgefährdet sein können, werden doppelt vorgehalten.

Beim teilweise automatisierten Fahren mit höherem Automatisierungsgrad oder beim vollautomatischen Fahren, insbesondere beim Fahren gemäß Level 4 oder Level 5 der SAE-J3016-Klassifizierung, steht der Fahrer definitionsgemäß als Rückfallebene nicht mehr zur Verfügung. Beispielsweise darf der Fahrer während einer vollautomatischen Fahrt auch schlafen. Dementsprechend muss ein Bremssteuersystem, um das Fahrzeug nach einem betriebsrelevanten Defekt in einen möglichst sicheren Zustand zu überführen, in solchen Fällen deutlich länger als 30 Sekunden fehlertolerant ("fail-operational") bleiben. Aufgrund dieser Anforderung kann nicht per se vernachlässigt werde, dass doppelte Fehler auftreten, insbesondere dass in jedem der redundanten Teilsysteme ein Fehler auftritt. Dementsprechend kann eine einfache Redundanz des Bremssteuersystems, wie es in bekannten Bremssteuersystemen vorgesehen ist, keine ausreichende Sicherheit bieten.

Das Dokument DE 10 2017 204157 A1 beschreibt ein Bremsregelsystem einer elektrohydraulischen Bremsanlage. Das Bremsregelsystem umfasst eine Betriebsbremse mit mindestens zwei hydraulischen Radbremsen. Eine Feststellbremse dient als redundantes Bremssystem. Dabei kann die Feststellbremse von demselben Steuergerät wie die Betriebsbremse angesteuert werden oder alternativ eine andere unabhängige Steuereinheit zur Steuerung der Feststellbremse eingesetzt werden.

Im Dokument DE 10 2013 021871 A1 wird ein Kraftfahrzeug mit zwei separaten redundanten Bremskreisen beschrieben.

Dokument US 2015/291279 A1 beschreibt ein Bremssystem für ein Flugzeug. Es sind vier Bremsgruppen vorgesehen, die in einem normalen Betriebsmodus und einem Notfallbetriebsmodus eingesetzt werden können. Ferner sind zwei Bremssteuereinheiten vorgesehen, die jeweils alle Bremsgruppen ansteuern können. Darüber hinaus ist eine Notfallbremssteuereinheit vorgesehen, die ebenfalls alle Bremsgruppen ansteuern kann, aber nur im Notfallmodus verwendet wird. Zur entsprechenden Weiterleitung entsprechender digitaler Datenbussignale von den Bremssteuereinheiten Aktuatorsteuerungen der Bremsgruppen sind Router vorgesehen.

Vor diesem Hintergrund ist es eine Aufgabe der vorliegenden Erfindung, ein verbessertes Konzept für ein Bremssteuersystem für ein wenigstens teilweise automatisch betreibbares Kraftfahrzeug anzugeben, welches die Fehlertoleranz des Bremssteuersystems verbessert.

Erfindungsgemäß wird diese Aufgabe durch ein Bremssteuersystem und ein Kraftfahrzeug nach den unabhängigen Ansprüchen gelöst. Vorteilhafte Weiterbildungen und weitere Ausführungsformen sind Gegenstand der abhängigen Ansprüche.

Das verbesserte Konzept beruht auf der Idee, zusätzlich zu zwei redundanten Bremskreisen ein zusätzliches Steuergerät und eine Schalteinrichtung vorzusehen, wobei die Schalteinrichtung abhängig von einem Fehlerstatus des Bremssteuersystems das zusätzliche Steuergerät wahlweise mit einem oder beiden Bremsaktuatoren der beiden redundanten Bremskreise verbinden kann.

Gemäß einem ersten unabhängigen Aspekt des verbesserten Konzepts wird ein Bremssteuersystem für ein Kraftfahrzeug angegeben, wobei das Bremssteuersystem ein erstes Steuergerät zur Steuerung eines ersten Bremsaktuators des Kraftfahrzeugs sowie ein zweites Steuergerät zur Steuerung eines zweiten Bremsaktuators des Kraftfahrzeugs aufweist. Das Bremssteuersystem weist außerdem ein drittes Steuergerät zur Steuerung des ersten Bremsaktuators und zur Steuerung des zweiten Bremsaktuators auf, sowie eine Schalteinrichtung, die dazu eingerichtet ist, das dritte Steuergerät abhängig von einem Fehlerstatus des Bremssteuersystems mit dem ersten Bremsaktuator und/oder mit dem zweiten Bremsaktuator zu verbinden.

Die Schalteinrichtung beinhaltet ein erstes Schaltelement zum Verbinden des ersten Steuergeräts mit dem ersten Bremsaktuator und zum Trennen, insbesondere galvanischen Trennen, des ersten Steuergeräts von dem ersten Bremsaktuator.

Insbesondere ist das erste Schaltelement mit dem ersten Steuergerät verbunden und mit dem ersten Bremsaktuator verbindbar oder verbunden, sodass das erste Schaltelement zwischen dem ersten Steuergerät und dem ersten Bremsaktuator angeordnet oder anordenbar ist.

Die Schalteinrichtung beinhaltet ein zweites Schaltelement zum Verbinden des dritten Steuergeräts mit dem ersten Bremsaktuator und zum Trennen, insbesondere galvanischen Trennen, des dritten Steuergeräts von dem ersten Bremsaktuator.

Insbesondere ist das zweite Schaltelement mit dem dritten Steuergerät verbunden und mit dem ersten Bremsaktuator verbindbar oder verbunden, sodass das zweite Schaltelement zwischen dem dritten Steuergerät und dem ersten Bremsaktuator angeordnet oder anordenbar ist.

Die Schalteinrichtung beinhaltet ein drittes Schaltelement zum Verbinden des dritten Steuergeräts mit dem zweiten Bremsaktuator und zum Trennen, insbesondere galvanischen Trennen, des dritten Steuergeräts von dem zweiten Bremsaktuator.

Insbesondere ist das dritte Schaltelement mit dem dritten Steuergerät verbunden und mit dem zweiten Bremsaktuator verbindbar oder verbunden, sodass das dritte Schaltelement zwischen dem dritten Steuergerät und dem zweiten Bremsaktuator angeordnet oder anordenbar ist.

Die Schalteinrichtung beinhaltet ein viertes Schaltelement zum Verbinden des zweiten Steuergeräts mit dem zweiten Bremsaktuator und zum Trennen, insbesondere galvanischen Trennen, des zweiten Steuergeräts von dem zweiten Bremsaktuator.

Insbesondere ist das vierte Schaltelement mit dem zweiten Steuergerät verbunden und mit dem zweiten Bremsaktuator verbindbar oder verbunden, sodass das vierte Schaltelement zwischen dem zweiten Steuergerät und dem zweiten Bremsaktuator angeordnet oder anordenbar ist.

Die Bremsaktuatoren des Kraftfahrzeugs, sowie gegebenenfalls weitere Bremsaktuatoren des Kraftfahrzeugs, können Teil des Bremssteuersystems sein. Alternativ sind die Bremsaktuatoren separat zum Bremssteuersystem vorgesehen und nicht Teil des Bremssteuersystems.

Bei dem Kraftfahrzeug handelt es sich insbesondere um ein wenigstens teilweise automatisch betreibbares Kraftfahrzeug. Insbesondere handelt es sich um ein Kraftfahrzeug zum teilweisen automatischen Fahren gemäß Level 3 oder Level 4 der SAE-J3016-Klassifizierung oder um ein Kraftfahrzeug zum vollständig automatischen, vollautomatisierten oder vollautonomen Fahren nach Level 5 der SAE-J3016-Klassifizierung. Vorzugsweise handelt es sich bei dem Kraftfahrzeug um ein Kraftfahrzeug nach Level 4 oder Level 5 der SAE-J3016-Klassifizierung.

Das erste Steuergerät und der erste Bremsaktuator sind beispielsweise Teil eines ersten oder primären Bremskreises. Der zweite Bremsaktuator und das zweite Steuergerät sind beispielsweise Teil eines zweiten oder sekundären Bremskreises. Der primäre und der sekundäre Bremskreis sind insbesondere redundant zueinander ausgelegt.

Die Schalteinrichtung ist dazu eingerichtet, das dritte Steuergerät abhängig von dem Fehlerstatus mit dem ersten Bremsaktuator zu verbinden oder von dem ersten Bremsaktuator zu trennen, insbesondere galvanisch zu trennen. Die Schalteinrichtung ist insbesondere dazu eingerichtet, das dritte Steuergerät abhängig von dem Fehlerstatus mit dem zweiten Bremsaktuator zu verbinden oder von dem zweiten Bremsaktuator zu trennen, insbesondere galvanisch zu trennen.

Ist das dritte Steuergerät mit einem der Bremsaktuatoren verbunden, so kann das dritte Steuergerät den jeweiligen Bremsaktuator ansteuern. Ist das dritte Steuergerät galvanisch von einem der Bremsaktuatoren getrennt, so ist eine Steuerung des jeweiligen Bremsaktuators durch das dritte Steuergerät nicht möglich.

Insbesondere ist das Bremssteuersystem, beispielsweise eines der Steuergeräte, dazu eingerichtet, die Schalteinrichtung anzusteuern, um das dritte Steuergerät mit dem ersten und/oder dem zweiten Bremsaktuator zu verbinden oder davon zu trennen.

Das Bremssteuersystem kann auch als Bremsregelsystem bezeichnet werden.

Durch das Vorsehen des dritten Steuergeräts sowie der Schalteinrichtung wird effektiv eine doppelte Redundanz des Bremssteuersystems realisiert. Eine einfache Redundanz wird insbesondere bereits durch das erste und das zweite Steuergerät zusammen mit dem ersten und dem zweiten Bremsaktuator, also durch den primären und den sekundären Bremskreis, realisiert. In einem betriebsrelevanten Fehlerfall des Bremsregelsystems oder Bremssteuersystems kann das dritte Steuergerät dazu eingesetzt werden, den ersten und/oder den zweiten Bremsaktuator zu steuern, wodurch eine zweite Redundanzebene implementiert wird. Dadurch kann das Bremssteuersystem auch im Fall zweier betriebsrelevanter Defekte oder Fehler in verschiedenen Bremskreisen weiterhin einsatzfähig bleiben, sodass das Bremssteuersystem für längere Zeiten als fehlertolerant (im Folgenden auch "fail-operational") angesehen werden kann. Dies liegt darin begründet, dass die Wahrscheinlichkeit eines dreifachen Fehlers, welcher sowohl den primären als auch den sekundären Bremskreis und das dritte Steuergerät beziehungsweise die Schalteinrichtung betreffen, sehr viel unwahrscheinlicher ist als bei einem doppelten Fehler und extrem viel unwahrscheinlicher als ein einfacher Fehler.

Als fehlertolerant oder fail-operational kann dabei verstanden werden, dass das Bremssteuersystem in einem Fehlerfall weiterhin funktioniert. Das Bremssteuersystem bleibt dabei also operativ.

Durch die Verbesserung der Fehlertoleranz, insbesondere durch die längeren Zeiten, für die von einem fail-operational-Betrieb des Bremssteuersystems ausgegangen werden kann, ist das Bremssteuersystem auch für solche teilweise oder vollständig automatisierten Kraftfahrzeuge anwendbar, bei denen ein Fahrer als potentielle Rückfallebene in einem betriebsrelevanten Fehlerfall nicht mehr zur Verfügung steht. Insbesondere ist das Bremssteuersystem auch für teilweise automatisierte Kraftfahrzeuge nach Level 4 der SAE-J3016-Klassifizierung und für vollautomatisierte Kraftfahrzeuge nach Level 5 der SAE-J3016-Klassifizierung anwendbar.

Zudem erfordert das verbesserte Konzept nicht, dass im Vergleich zu einem einfach redundant ausgelegten System zusätzliche Bremsaktuatoren vorgesehen werden, was zu einer geringen Komplexität, zu einem geringen Bauraum und zu geringen Kosten eines Bremssteuersystems nach dem verbesserten Konzept führt.

Die Bremsaktuatoren können beispielsweise jeweils einen Bremskraftverstärker aufweisen. Zusätzlich können die Bremsaktuatoren beispielsweise jeweils eine Antriebseinheit, beispielsweise eine hydraulische, pneumatische, elektronische oder elektrische Antriebseinheit, aufweisen, um eine dem jeweiligen Bremsaktuator zugeordnete Bremse betätigen zu können, insbesondere angesteuert von dem jeweiligen zur Steuerung vorgesehenen Steuergerät.

Gemäß zumindest einer Ausführungsform des Bremssteuersystems dienen der erste und der zweite Bremsaktuator jeweils zur Betätigung einer zugehörigen Feststellbremse des Kraftfahrzeugs.

Gemäß zumindest einer Ausführungsform des Bremssteuersystems ist das erste Steuergerät zur Spannungsversorgung des ersten Steuergeräts mit einem ersten Bordnetz des Kraftfahrzeugs verbindbar oder verbunden. Das zweite Steuergerät ist zur Spannungsversorgung des zweiten Steuergeräts mit einem zweiten Bordnetz des Kraftfahrzeugs verbindbar oder verbunden. Das dritte Steuergerät ist zur Spannungsversorgung des dritten Steuergeräts mit dem ersten Bordnetz verbindbar oder verbunden und mit dem zweiten Bordnetz verbindbar oder verbunden, insbesondere gleichzeitig oder wahlweise mit dem ersten und dem zweiten Bordnetz verbindbar oder verbunden.

Beispielsweise ist der erste Bremsaktuator zur Spannungsversorgung des ersten Bremsaktuators mit dem ersten Bordnetz verbindbar oder verbunden und der zweite Bremsaktuators ist zur Spannungsversorgung des zweiten Bremsaktuators mit dem zweiten Bordnetz verbindbar oder verbunden.

Bei einem Bordnetz handelt es sich dabei insbesondere um ein Energie- oder Spannungsversorgungsnetz des Kraftfahrzeugs.

Das erste und das zweite Bordnetz sind insbesondere redundant zueinander ausgelegt.

Durch die redundante Auslegung der Bordnetze kann das Bremssteuersystem auch bei einem betriebsrelevanten Defekt oder Fehler eines der Bordnetze fail-operational bleiben. Mit Vorteil ist das dritte Steuergerät mit beiden Bordnetzen verbindbar oder verbunden, sodass ein Ausfall eines der beiden Bordnetze die Funktion des dritten Steuergeräts nicht beeinträchtigt.

Gemäß zumindest einer Ausführungsform beinhaltet das Bremssteuersystem das erste und das zweiten Bordnetz zumindest teilweise.

Gemäß zumindest einer Ausführungsform ist das dritte Steuergerät zur Spannungsversorgung des dritten Steuergeräts mit einem dritten Bordnetz des Kraftfahrzeugs verbindbar.

Dabei kann das dritte Steuergerät mit dem dritten Bordnetz alternativ oder zusätzlich zur Verbindung mit dem ersten und dem zweiten Bordnetz verbindbar sein.

Durch das Vorsehen des dritten Bordnetzes ist auch der gleichzeitige Ausfall des ersten und des zweiten Bordnetzes abgedeckt, sodass auch in diesem Fall das Bremssteuersystem fail-operational bleiben kann.

Insbesondere ist das dritte Bordnetz redundant zu dem ersten und dem zweiten Bordnetz ausgelegt.

Gemäß zumindest einer Ausführungsform beinhaltet das Bremssteuersystem das dritte Bordnetz wenigstens teilweise.

Gemäß zumindest einer Ausführungsform ist das Steuergerät mit einem weiteren ersten Bremsaktuator des Kraftfahrzeugs verbindbar oder verbunden und dazu eingerichtet, den weiteren ersten Bremsaktuator zu steuern, insbesondere wenn es mit diesem verbunden ist.

Gemäß zumindest einer Ausführungsform ist das zweite Steuergerät mit einem weiteren zweiten Bremsaktuator des Kraftfahrzeugs verbindbar oder verbunden und dazu eingerichtet, den weiteren zweiten Bremsaktuator zu steuern, insbesondere wenn es mit diesem verbunden ist.

Insbesondere können das erste und/oder das zweite Steuergerät derart mit dem ersten weiteren beziehungsweise dem zweiten weiteren Bremsaktuator verbindbar oder verbunden sein, dass die Verbindung jeweils unabhängig von der Schalteinrichtung und insbesondere jeweils unabhängig von dem Fehlerstatus des Kraftfahrzeugs besteht.

Bei den weiteren Bremsaktuatoren kann es sich insbesondere um Bremsaktuatoren zur Betätigung jeweils zugeordneter Betriebsbremsen des Kraftfahrzeugs handeln.

Das erste Steuergerät kann also den ersten Bremsaktuator und/oder den ersten weiteren Bremsaktuator ansteuern, das zweite Steuergerät kann den zweiten Bremsaktuator und/oder den zweiten weiteren Bremsaktuator ansteuern und das dritte Steuergerät kann den ersten und den zweiten Bremsaktuator ansteuern.

Dadurch können zum einen sämtliche Einfachfehler des Bremssteuersystems abgedeckt werden als auch sämtliche Varianten von Doppelfehlern. Als Doppelfehler kann dabei insbesondere ein Fehlerfall verstanden werden, in dem zwei betriebsrelevante Defekte oder Fehler unterschiedlicher Komponenten, insbesondere der Steuergeräte, der Bremsaktuatoren, der weiteren Bremsaktuatoren und der Bordnetze, auftreten. Ausgenommen sind dabei solche Fehlersituationen, in denen das erste und das zweite Bordnetz gleichzeitig ausfallen und das dritte Bordnetz nicht vorgesehen ist.

Gemäß zumindest einer Ausführungsform ist die Schalteinrichtung dazu eingerichtet, abhängig von dem Fehlerstatus das erste Steuergerät mit dem ersten Bremsaktuator zu verbinden oder das erste Steuergerät von dem ersten Bremsaktuator zu trennen, insbesondere galvanisch zu trennen.

Gemäß zumindest einer Ausführungsform ist die Schalteinrichtung dazu eingerichtet, abhängig von dem Fehlerstatus das zweite Steuergerät mit dem zweiten Bremsaktuator zu verbinden oder das zweite Steuergerät von dem zweiten Bremsaktuator zu trennen, insbesondere galvanisch zu trennen.

Insbesondere ist die Schalteinrichtung dazu eingerichtet, das erste Steuergerät von dem ersten Bremsaktuator zu trennen, wenn das dritte Steuergerät mit dem ersten Bremsaktuator verbunden ist und das dritte Steuergerät von dem ersten Bremsaktuator zu trennen, wenn das erste Steuergerät mit dem ersten Bremsaktuator verbunden ist. Außerdem ist die Schalteinrichtung beispielsweise dazu eingerichtet, das zweite Steuergerät von dem zweiten Bremsaktuator zu trennen, wenn das dritte Steuergerät mit dem zweiten Bremsaktuator verbunden ist und das dritte Steuergerät von dem zweiten Bremsaktuator zu trennen, wenn das zweite Steuergerät mit dem zweiten Bremsaktuator verbunden ist.

Gemäß zumindest einer Ausführungsform ist das erste Steuergerät, das zweite Steuergerät oder das dritte Steuergerät als Schaltsteuergerät ausgebildet oder das Bremssteuersystem weist ein viertes Steuergerät auf, das als Schaltsteuergerät ausgebildet ist. Das Schaltsteuergerät ist mit der Schalteinrichtung gekoppelt oder verbunden und dazu eingerichtet, die Schalteinrichtung, insbesondere die Schaltelemente, abhängig von dem Fehlerstatus anzusteuern, insbesondere die Schaltelemente zu öffnen oder zu schließen, um das dritte Steuergerät mit dem ersten Bremsaktuator und/oder dem zweiten Bremsaktuator zu verbinden oder das dritte Steuergerät von dem ersten und/oder dem zweiten Bremsaktuator zu trennen.

Das Schaltsteuergerät ist insbesondere ferner dazu eingerichtet, die Schalteinrichtung anzusteuern, um das erste Steuergerät mit dem ersten Bremsaktuator zu verbinden oder von dem ersten Bremsaktuator zu trennen und dazu eingerichtet, das zweite Steuergerät mit dem zweiten Bremsaktuator zu verbinden oder von dem zweiten Bremsaktuator zu trennen.

Ein Vorteil bei der Ausgestaltung des dritten Steuergeräts oder des vierten Steuergeräts als Schaltsteuergerät ist, dass das erste oder zweite Schaltsteuergerät eines beispielsweise bereits vorhandenen Systems nicht spezifisch angepasst werden müssen, um die Schalteinrichtung anzusteuern. Bei der Ausgestaltung des dritten Steuergeräts als Schaltsteuergerät besteht zusätzlich der Vorteil, dass auf das vierte Steuergerät verzichtet werden kann.

Gemäß zumindest einer Ausführungsform ist das erste Steuergerät mit einem Datenübertragungssystem des Kraftfahrzeugs verbunden oder verbindbar, um Steuerbefehle zur Steuerung des ersten Bremsaktuators und/oder zur Steuerung des ersten weiteren Bremsaktuators zu erhalten.

Gemäß zumindest einer Ausführungsform ist das zweite Steuergerät mit dem Datenübertragungssystem verbindbar oder verbunden, um Steuerbefehle zur Steuerung des zweiten Bremsaktuators und/oder des zweiten weiteren Bremsaktuators zu erhalten.

Gemäß zumindest einer Ausführungsform ist das dritte Steuergerät mit dem Datenübertragungssystem verbunden oder verbindbar, um Steuerbefehle zur Steuerung des ersten Bremsaktuators und/oder des zweiten Bremsaktuators zu erhalten.

Gemäß zumindest einer Ausführungsform ist das Schaltsteuergerät mit dem Datenübertragungssystem verbunden oder verbindbar, um ein Fehlersignal zu erhalten, welches von dem Fehlerstatus des Kraftfahrzeugs abhängt.

Das Fehlersignal definiert insbesondere eindeutig den Fehlerstatus des Kraftfahrzeugs oder des Bremssteuersystems.

Das Datenübertragungssystem kann beispielsweise als Datenbussystem, beispielsweise als Feldbussystem, insbesondere als CAN-Bussystem ausgestaltet sein.

Gemäß zumindest einer Ausführungsform beinhaltet das Bremssteuersystem das Datenübertragungssystem zumindest teilweise.

Das Datenübertragungssystem kann beispielsweise mit einer zentralen Steuereinheit oder einem weiteren Steuergerät des Kraftfahrzeugs verbunden, um die Steuerbefehle zu erhalten.

Die Zentrale Steuereinheit kann beispielsweise auch das Fehlersignal bereitstellen. Alternativ kann das Fehlersignal oder können jeweilige Anteile des Steuersignals von dem ersten und/oder dem zweiten Steuergerät bereitgestellt werden.

Gemäß zumindest einer Ausführungsform beinhaltet das Bremssteuersystem den ersten und den zweiten Bremsaktuator. Das erste Steuergerät und das dritte Steuergerät sind jeweils über die Schalteinrichtung, insbesondere das erste Steuergerät über das erste Schaltelement und das dritte Steuergerät über das zweite Schaltelement, mit dem ersten Bremsaktuator verbunden. Das zweite Steuergerät und das dritte Steuergerät sind jeweils über die Schalteinrichtung, insbesondere das dritte Steuergerät über das dritte Schaltelement und das zweite Steuergerät über das vierte Schaltelement, mit dem zweiten Bremsaktuator verbunden.

Die Schalteinrichtung, beziehungsweise die Schaltelemente, sind damit zwischen dem jeweiligen Steuergerät und dem jeweiligen Bremsaktuator angeordnet.

Gemäß zumindest einer Ausführungsform ist das Steuergerät mit dem ersten weiteren Bremsaktuator verbunden und das zweite Steuergerät ist mit dem zweiten weiteren Bremsaktuator verbunden.

Gemäß einem weiteren unabhängigen Aspekt des verbesserten Konzepts wird ein Kraftfahrzeug angegeben, welches ein Bremssteuersystem nach dem verbesserten Konzept aufweist.

Das Kraftfahrzeug ist insbesondere teilweise oder vollständig automatisch betreibbar, entspricht insbesondere einem Kraftfahrzeug gemäß Level 4 oder Level 5 der SAE-J3016-Klassifizierung.

Die Erfindung umfasst auch die Kombinationen der Merkmale der beschriebenen Ausführungsformen.

Im Folgenden ist ein Ausführungsbeispiel der Erfindung beschrieben. Hierzu zeigt:
- Fig. 1: ein Blockdiagramm einer beispielhaften Ausführungsform eines Bremssteuersystems nach dem verbesserten Konzept;
- Fig. 2: eine beispielhafte Ausführungsform eines Kraftfahrzeugs nach dem verbesserten Konzept; und
- Fig. 3: eine Fehlerfalltabelle einer weiteren beispielhaften Ausführungsform eines Bremssteuersystems nach dem verbesserten Konzept.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In den Figuren sind funktionsgleiche Elemente jeweils mit denselben Bezugszeichen versehen.

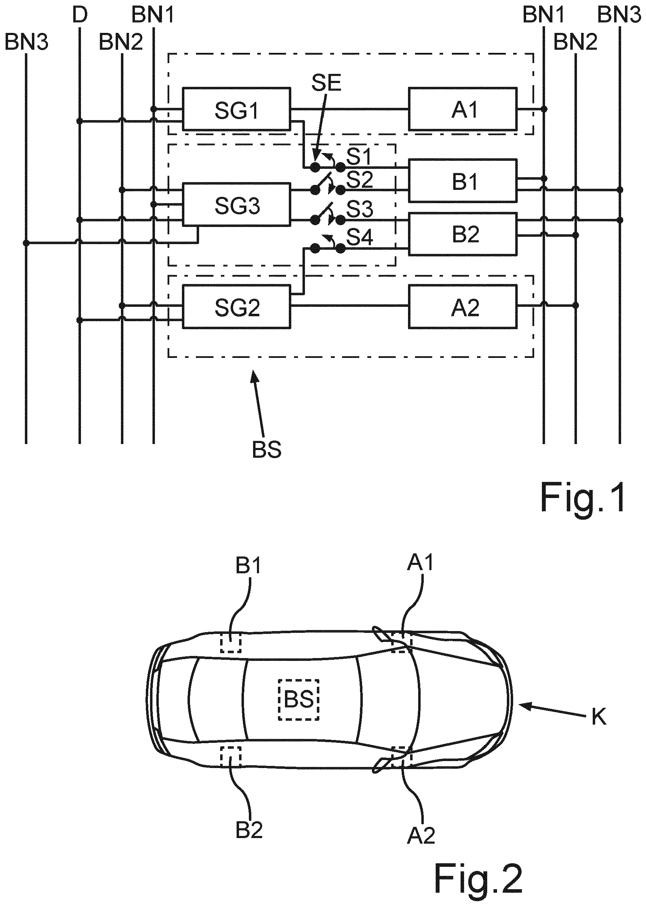

In Fig. 1 ist eine beispielhafte Ausführungsform eines Bremssteuersystems BS nach dem verbesserten Konzept gezeigt.

Das Bremssteuersystem BS weist einen ersten Bremsaktuator B1 auf, der mit einem ersten Bordnetz BN1 eines Kraftfahrzeugs K zur Spannungsversorgung verbunden ist. Das Bremssteuersystem BS weist außerdem ein erstes Steuergerät SG1 auf, welches ebenfalls zur Spannungsversorgung mit dem ersten Bordnetz BN1 verbunden ist und mit einem Datenbus D des Kraftfahrzeugs K verbunden ist. Das Bremssteuersystem BS weist auch eine Schalteinrichtung SE auf, welche einen ersten Schalter S1 beinhaltet. Das erste Steuergerät SG1 ist über den ersten Schalter S1 mit dem ersten Bremsaktuator B1 verbindbar.

Das Bremssteuersystem BS weist außerdem einen zweiten Bremsaktuator B2 auf, der zur Spannungsversorgung mit einem zweiten Bordnetz BN2 des Kraftfahrzeugs K verbunden ist. Das Bremssteuersystem BS weist ein zweites Steuergerät SG2 auf, das zur Spannungsversorgung ebenfalls mit dem zweiten Bordnetz BN2 verbunden ist. Außerdem ist das zweite Steuergerät SG2 mit dem Datenbus D verbunden. Die Schalteinrichtung SE weist einen vierten Schalter S4 auf, über den das zweite Steuergerät SG2 mit dem zweiten Bremsaktuator B2 verbindbar ist.

Das Bremssteuersystem BS weist außerdem ein drittes Steuergerät SG3 auf, das zur Spannungsversorgung sowohl mit dem ersten Bordnetz BN1, als auch mit dem zweiten Bordnetz BN2 verbunden ist. Die Bordnetze BN1, BN2 können jeweils unabhängig voneinander zur Spannungsversorgung des dritten Steuergeräts SG3 dienen. Die Schalteinrichtung SE weist einen zweiten Schalter S2 auf, mittels dem das dritte Steuergerät SG3 mit dem ersten Bremsaktuator B1 verbindbar ist und einen dritten Schalter S3, mittels dem das dritte Steuergerät SG3 mit dem zweiten Bremsaktuator B2 verbindbar ist.

Das Bremssteuersystem BS kann beispielsweise einen weiteren ersten Bremsaktuator A1 aufweisen, der zur Spannungsversorgung mit dem ersten Bordnetz BN1 verbunden ist und mit dem ersten Steuergerät SG1 verbunden ist. Außerdem kann das Bremssteuersystem BS einen zweiten weiteren Bremsaktuator A2 aufweisen, der zur Spannungsversorgung mit dem zweiten Bordnetz BN2 verbunden ist und mit dem zweiten Steuergerät SG2 verbunden ist.

Optional kann das Kraftfahrzeug K ein drittes Bordnetz BN3 aufweisen, welches zur Spannungsversorgung des dritten Steuergeräts SG3 mit diesem verbunden sein kann. Die Spannungsversorgung des dritten Steuergeräts SG3 über das dritte Bordnetz BN3 kann alternativ oder zusätzlich zur Spannungsversorgung über das erste und/oder das zweite Bordnetz BN1, BN2 erfolgen. Beispielsweise können der erste und der zweite Bremsaktuator B1, B2 zur Spannungsversorgung, insbesondere zusätzlich zur Spannungsversorgung über das erste Bordnetz BN1 beziehungsweise das zweite Bordnetz BN2, mit dem dritten Bordnetz BN3 verbunden sein.

In Fig. 2 ist schematisch eine beispielhafte Ausführungsform eines Kraftfahrzeugs K nach dem verbesserten Konzept gezeigt. Das Kraftfahrzeug K weist ein Bremssteuersystem BS nach dem verbesserten Konzept auf, beispielsweise ein Bremssteuersystem BS, wie es in Fig. 1 gezeigt und bezüglich Fig. 1 erläutert ist.

In dem Beispiel der Fig. 2 kann es sich bei den Bremsaktuatoren B1, B2 beispielsweise um Bremsaktuatoren für Feststellbremsen des Kraftfahrzeugs K handeln, die beispielsweise an hinteren Rädern des Kraftfahrzeugs K angeordnet sein können. Bei den weiteren Bremsaktuatoren A1, A2 kann es sich beispielsweise um Bremsaktuatoren für Betriebsbremsen des Kraftfahrzeugs K handeln, die beispielsweise an vorderen Rädern des Kraftfahrzeugs K angeordnet sind.

Wiederum Bezug nehmend auf Fig. 1 kann das dritte Steuergerät SG3 beispielsweise mit den Schaltern S1, S2, S3, S4 der Schalteinrichtung SE verbunden sein, um diese anzusteuern, insbesondere um sie wahlweise zu öffnen oder zu schließen. Das dritte Steuergerät SG3 kann beispielsweise über den Datenbus D ein Fehlersignal erhalten, beispielsweise von einer zentralen Steuereinheit des Kraftfahrzeugs K und/oder von den Steuergeräten SG1, SG2, wobei das Fehlersignal Informationen über einen Fehlerstatus des Bremssteuersystems BS beinhaltet. Insbesondere kann das dritte Steuergerät SG3 basierend auf dem Fehlersignal bestimmen, ob ein Fehler oder Defekt, insbesondere ein betriebsrelevanter Fehler oder Defekt, eines der Steuergeräte SG1, SG2, SG3, eines der Bremsaktuatoren A1, A2, B1, B2, und/oder eines der Bordnetze BN1 oder BN2 vorliegt.

Abhängig von dem Fehlersignal und dem entsprechenden Fehlerstatus des Bremssteuersystems BS kann das dritte Steuergerät SG3 die Steuergeräte SG1, SG2, SG3 gezielt mit den Bremsaktuatoren B1, B2 verbinden oder galvanisch von diesen trennen, um eine Betriebsbereitschaft des Bremssteuersystems BS auch im Falle von Fehlern der genannten Komponenten des Bremssteuersystems BS zu gewährleisten.

Vorbehaltlich etwaiger Defekte kann die erste Steuereinheit SG1 den ersten weiteren Bremsaktuator A1 ansteuern und, insbesondere wenn der erste Schalter S1 geschlossen ist, den ersten Bremsaktuator B1. Das zweite Steuergerät SG2 kann, vorbehaltlich etwaiger Defekte, den zweiten weiteren Bremsaktuator A2 ansteuern und, insbesondere wenn der vierte Schalter S4 geschlossen ist, den zweiten Bremsaktuator B2. Das dritte Steuergerät kann bei geschlossenem zweiten Schalter S2 den ersten Bremsaktuator B1 ansteuern und bei geschlossenem dritten Schalter S3 den zweiten Bremsaktuator B2.

Die Bremsaktuatoren B1, B2 können beispielsweise dazu eingerichtet sein, eine Verzögerung des Kraftfahrzeugs K von 2,44 m/s² oder mehr zu erzielen. Die weiteren Bremsaktuatoren A1, A2 sind beispielsweise dazu eingerichtet, ebenfalls mindestens eine Verzögerung des Kraftfahrzeugs K von 2,44 m/s² zu erzeugen. Vorzugsweise sind die weiteren Bremsaktuatoren A1, A2 dazu eingerichtet, wenigstens eine Verzögerung des Kraftfahrzeugs K von 6,45 m/s² zu erzielen.

Durch die verschiedenen Möglichkeiten die Steuergeräte SG1, SG2 und SG3 über die Schalteinrichtung SE mit dem ersten Bremsaktuator B1 und/oder dem zweiten Bremsaktuator B2 zu verbinden, kann erzielt werden, dass beim Ausfall von bis zu zweien der Steuergeräte SG1, SG2, SG3, der Bremsaktuatoren A1, A2, B1, B2 sowie der Bordnetze BN1, BN2, mit Ausnahme eines gleichzeitigen Ausfall beider Bordnetze BN1, BN2, eine wirksame Betätigung wenigstens eines der Bremsaktuatoren A1, A2, B1, B2 möglich bleibt. Indem jeder der Bremsaktuatoren A1, A2, B1, B2 eine erforderliche oder beispielsweise vorgeschriebene Mindestverzögerung, beispielsweise 2,44 m/s² erzielen kann, kann in jedem der beschriebenen Fehlerfälle diese Vorgabe erfüllt werden und das Bremssteuersystem BS fail-operational bleiben.

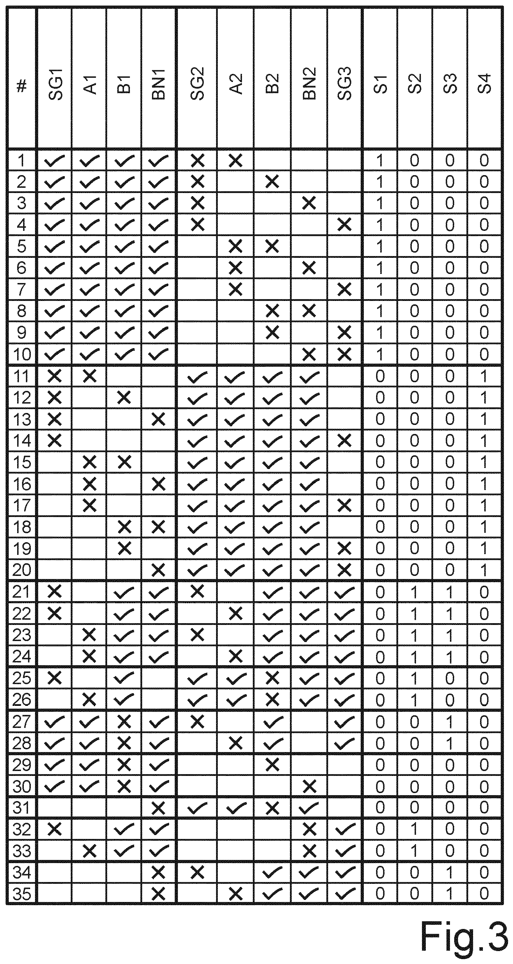

In Fig. 3 ist eine Fehlertabelle gezeigt, die verschiedene Fehlerstatus oder Fehlerfälle eines Bremssteuersystems BS, wie es beispielsweise in Fig. 1 gezeigt ist, auflistet. Das optionale dritte Bordnetz BN3 ist hier beispielsweise nicht vorgesehen. Die erste Spalte der Tabelle zeigt eine laufende Nummer des Fehlerstatus. Die zweite Spalte entspricht einem Status des ersten Steuergeräts SG1, die dritte Spalte einem Status des ersten weiteren Bremsaktuators A1, die vierte Spalte einem Status des ersten Bremsaktuators B1 und die fünfte Spalte einem Status des ersten Bordnetzes BN1. Die sechste Spalte entspricht einem Status des zweiten Steuergeräts SG2, die siebte Spalte entspricht einem Status des zweiten weiteren Bremsaktuators A2, die achte Spalte entspricht einem Status des zweiten Bremsaktuators B2 und die neunte Spalte entspricht einem Status des zweiten Bordnetzes BN2. Die zehnte Spalte entspricht einem Status des dritten Steuergeräts SG3. Die elfte Spalte entspricht einem Schaltzustand des ersten Schalters S1, die zwölfte Spalte entspricht einem Schaltzustand des zweiten Schalters S2, die dreizehnte Spalte entspricht einem Schaltzustand des dritten Schalters S3 und die vierzehnte Spalte entspricht einem Schaltzustand des vierten Schalters S4.

Ein Schaltzustand eines Schalters S1, S2, S3, S4, der einem geöffneten Schalter entspricht, ist mit 0 bezeichnet, ein Schaltzustand, der einem geschlossenen Schalter entspricht, ist mit 1 gekennzeichnet. Ein Kreuz ("x") bei einer der Komponenten bedeutet, dass ein betriebsrelevanter Defekt der jeweiligen Komponente vorliegt. Ist kein Kreuz vorhanden, so liegt kein betriebsrelevanter Defekt der jeweiligen Komponente vor. Ein Häkchen "✔" bei einer der Komponenten bedeutet, dass die jeweilige Komponente zum Bereitstellen einer Bremswirkung für das Kraftfahrzeug K in dem entsprechenden Fehlerszenario herangezogen werden kann.

Eine Situation, in der ein gleichzeitiger Fehler beider Bordnetze BN1 und BN2 vorliegt, ist nicht berücksichtigt. Bei robusten Bordnetzen kann davon ausgegangen werden, dass solche Fehler sehr unwahrscheinlich sind und für entsprechende Anwendungsfälle vernachlässigbar. Insbesondere wird beim Defekt eines der Steuergeräte SG1, SG2, SG3 oder eines der Bremsaktuatoren B1, B2 der Schalter S1, S2, S3, S4, welcher mit der jeweiligen Komponente verbunden ist, geöffnet, sodass das entsprechende Steuergerät SG1, SG2, SG3 von dem entsprechenden Bremsaktuator B1, B2 galvanisch getrennt ist.

Die in Fig. 3 gezeigten 35 Fehlerstatus können beispielsweise in neun Gruppen aufgeteilt werden. Dabei unterscheiden sich die einzelnen Gruppen jeweils durch diejenigen Komponenten, welche im Fehlerfall die erforderliche Bremswirkung erzielen, sowie in den zugehörigen Schalterstellungen. Zur Erläuterung werden das erste Steuergerät SG1, das erste Bordnetz BN1 sowie die ersten und weiteren ersten Bremsaktuatoren B1, A1 einem primären Bremskreis zugeordnet und das zweite Steuergerät SG2, das zweite Bordnetz BN2, der zweite Bremsaktuator B2 und der zweite weitere Bremsaktuator A2 einem sekundären Bremskreis.

Des Weiteren wird im Folgenden, ohne Beschränkung der Allgemeinheit, angenommen, dass jeder der Bremsaktuatoren B1, B2 eine Bremsverzögerung von 2,44 m/s² oder mehr erzielen kann und jeder der weiteren Bremsaktuatoren A1, A2 eine Bremsverzögerung von 6,45 m/s² oder mehr.

Die Fehlerfälle 1 bis 10 können einer ersten Gruppe zugerechnet werden. Diese Fehlerfälle haben gemein, dass betriebsrelevante Fehler in zwei Komponenten des sekundären Bremskreises vorliegen. Demzufolge ist die dritte Steuereinheit SG3 dazu eingerichtet, den ersten Schalter S1 zu schließen und die übrigen Schalter S2, S3, S4 zu öffnen. Das erste Steuergerät SG1 kann den ersten Bremsaktuator B1 und den weiteren ersten Bremsaktuator A1 ansteuern, sodass der sekundäre Bremskreis eine Bremsverzögerung von mindestens 6,45 m/s² + 2,44 m/s² = 8,89 m/s² erzeugen kann.

Die Fehlerfälle 11 bis 20 können einer zweiten Gruppe zugeordnet werden. Die Fehlerfälle der zweiten Gruppe haben gemein, dass zwei betriebsrelevante Defekte oder Fehler unterschiedlicher Komponenten des primären Bremskreises vorliegen. Dementsprechend ist die dritte Steuereinheit SG3 dazu eingerichtet, den vierten Schalter S4 zu schließen und die übrigen Schalter S1, S2, S3 zu öffnen. Das zweite Steuergerät SG2 kann den zweiten Bremsaktuator B2 und den weiteren zweiten Bremsaktuator A2 ansteuern, sodass der sekundäre Bremskreis eine minimale Bremsverzögerung von 8,89 m/s² erzielen kann.

Die Fehlerfälle 21 bis 24 können einer dritten Gruppe zugeordnet werden, bei denen im primären Bremskreis das erste Steuergerät SG1 oder der erste weitere Bremsaktuator A1 einen betriebsrelevanten Fehler aufweist und in dem sekundären Bremskreis das zweite Steuergerät 2 oder der zweite weitere Bremsaktuator A2.

Das dritte Steuergerät SG3 ist dementsprechend dazu eingerichtet, den zweiten Schalter S2 und den dritten Schalter S3 zu schließen und den ersten Schalter S1 sowie den vierten Schalter S4 zu öffnen. Dementsprechend kann das dritte Steuergerät den ersten und den zweiten Bremsaktuator B1, B2 ansteuern und damit eine minimale Bremsverzögerung von 2 × 2,44 m/s² = 4,88 m/s² erreichen.

Die Fehlerfälle 25 und 26 können einer vierten Gruppe zugeordnet werden, bei denen im sekundären Bremskreis der zweite Bremsaktuator B2 einen betriebsrelevanten Defekt aufweist und im primären Bremskreis entweder das erste Steuergerät SG1 oder der erste weitere Bremsaktuator A1. Dementsprechend ist das dritte Steuergerät SG3 dazu eingerichtet, den zweiten Schalter S2 zu schließen und die übrigen Schalter S1, S3, S4 zu öffnen. Das zweite Steuergerät SG3 kann dementsprechend den weiteren zweiten Bremsaktuator A2 ansteuern und das dritte Steuergerät SG3 den ersten Bremsaktuator B1, sodass insgesamt eine minimale Bremsverzögerung von 8,89 m/s² erzielt werden kann.

Die Fehlerfälle 27 und 28 können einer fünften Gruppe zugeordnet werden, bei der im primären Bremskreis der erste Bremsaktuator B1 einen betriebsrelevanten Defekt aufweist und im sekundären Bremskreis entweder das zweite Steuergerät SG2 oder der zweite weitere Bremsaktuator A2. Entsprechend ist das dritte Steuergerät SG3 dazu eingerichtet, den dritten Schalter S3 zu schließen und die übrigen Schalter S1, S2, S4 zu öffnen. Dadurch kann das erste Steuergerät den ersten weiteren Bremsaktuator A1 und das dritte Steuergerät SG3 den zweiten Bremsaktuator B2 ansteuern, und so eine minimale Bremsverzögerung von 8,89 m/s² zu erreichen.

Die Fehlerfälle 29 und 30 können einer sechsten Gruppe zugeordnet werden, bei der im primären Bremskreis der erste Bremsaktuator B1 einen betriebsrelevanten Defekt aufweist und im sekundären Bremskreis entweder der zweite Bremsaktuator B2 oder das zweite Bordnetz BN2. Dementsprechend ist das dritte Steuergerät SG3 dazu eingerichtet, alle vier Schalter S1, S2, S3, S4 zu öffnen. Das erste Steuergerät SG1 ist dann in der Lage, den ersten weiteren Bremsaktuator A1 anzusteuern, um eine minimale Bremsverzögerung von 6,45 m/s² zu erzielen.

Der Fehlerfall 31 entspricht einer siebten Gruppe, wobei hier im primären Bremskreis ein betriebsrelevanter Defekt des ersten Bordnetzes BN1 und im zweiten Bremskreis ein betriebsrelevanter Defekt des zweiten Bremsaktuators B2 vorliegt. Entsprechend ist auch hier das dritte Steuergerät SG3 dazu eingerichtet, alle vier Schalter S1, S2, S3, S4 zu öffnen. In diesem Fall kann das zweite Steuergerät SG2 den zweiten weiteren Bremsaktuator A2 ansteuern, sodass eine minimale Bremsverzögerung von 6,45 m/s² erzielt werden kann.

Die Fehlerfälle 32 und 33 können einer achten Gruppe zugeordnet werden, wobei hier im primären Bremskreis entweder das erste Steuergerät SG1 oder der erste weitere Bremsaktuator A1 einen betriebsrelevanten Defekt aufweisen und im sekundären Bremskreis das zweite Bordnetz BN2. In diesem Fall ist das dritte Steuergerät SG3 dazu eingerichtet, den zweiten Schalter S2 zu schließen und die übrigen Schalter S1, S3, S4 zu öffnen. Damit kann das dritte Steuergerät SG3 den ersten Bremsaktuator B1 ansteuern, sodass eine minimale Bremsverzögerung von 2,44 m/s² erzielt werden kann.

Die Fehlerfälle 34 und 35 können einer neunten Gruppe zugeordnet werden, wobei im primären Bremskreis ein betriebsrelevanter Defekt des ersten Bordnetzes BN1 und im sekundären Bremskreis entweder ein betriebsrelevanter Defekt des zweiten Steuergeräts SG2 oder einer des zweiten weiteren Bremsaktuators A2 vorliegt. Dementsprechend ist das dritte Steuergerät SG3 dazu eingerichtet, den dritten Schalter S3 zu schließen, und die übrigen Schalter S1, S2, S4 zu öffnen. Damit kann das dritte Steuergerät SG3 den zweiten Bremsaktuator B2 ansteuern, um so wiederum eine minimale Bremsverzögerung von 2,44 m/s² zu erzielen.

Beispielhaft sollen einige Fehlerfälle individuell betrachtet werden. Im Fehlerfall 21 fallen beispielsweise das erste Steuergerät SG1 und das zweite Steuergerät SG2 gleichzeitig aus, was mittels des Fehlersignals von dem dritten Steuergerät SG3 erkannt wird. Das dritte Steuergerät SG3 öffnet dann den ersten Schalter S1 und den vierten Schalter S4 und schließt den zweiten Schalter S2 und den dritten Schalter S3, wodurch das dritte Steuergerät SG3 von den übrigen Steuergeräten SG1 und SG2 galvanisch getrennt wird und nun die Bremsaktuatoren B1 und B2 ansteuern kann. Das Gleiche gilt für einen gleichzeitigen Ausfall des zweiten Steuergeräts SG2 und des ersten weiteren Bremsaktuators A1 wie im Fehlerfall 22 beziehungsweise für einen gleichzeitigen Ausfall des ersten weiteren Bremsaktuators A1 und des zweiten weiteren Bremsaktuators A2, wie im Fehlerfall 24.

Fallen, wie in den Fehlerfällen 27 und 30, beispielsweise im primären Bremskreis der erste Bremsaktuator B1 und im sekundären Bremskreis das zweite Steuergerät SG2 oder das zweite Bordnetz BN2 aus, kann die Bremswirkung allein über das dritte Steuergerät SG3 und den zweiten Bremsaktuator B2 erzielt werden. Dazu wird der dritte Schalter S3 geschlossen und der erste, der zweite und der dritte Schalter S1, S2, S4 werden geöffnet.

Insbesondere wird in den Fehlerfällen 1 bis 31 eine Mindestverzögerung erzielt, die größer ist als 2,44 m/s². In den Fehlerfällen 32 und 33, bei denen im primären Bremskreis ein Fehler im ersten Steuergerät SG1 oder im ersten weiteren Bremsaktuator A2 vorliegt, sowie im sekundären Bremskreis ein Fehler des zweiten Bordnetzes BN2, wird die Mindestverzögerung von 2,44 m/s² ebenfalls erreicht. Entsprechendes gilt für die Fehlerfälle 34 und 35.

Gemäß dem verbesserten Konzept wird eine Fehlertoleranz eines Bremssteuersystems verbessert, indem eine Zeit, für die ein fail-operational-Betrieb gewährleistet werden kann, vergrößert wird. Insbesondere können gemäß dem verbesserten Konzept Kosten gespart werden, indem eine Lösung zur Ertüchtigung von bestehenden, für Fahren nach Level 3 der SAE-J3016-Klassifizierung ausgelegte Bremssteuersysteme für Level 4 oder Level 5 ertüchtigt werden.

In verschiedenen Ausführungsformen ist keine Anpassung von Hardware des primären oder sekundären Bremskreises erforderlich, was ebenfalls zu einer Kostenersparnis bei der Entwicklung und Fertigung des Bremssteuersystems führen kann. Durch die Verwendung eines Zusatzsteuergeräts und der Schalteinrichtung kann Komplexität und Bauraum des Systems eingespart werden.

### Bezugszeichenliste

- SG1, SG2, SG3: Steuergeräte
- A1, A2, B1, B2: Bremsaktuatoren
- SE: Schalteinrichtung
- S1, S2, S3, S4: Schaltelemente
- BS: Bremssteuersystem
- D: Datenübertragungssystem
- BN1, BN2, BN3: Bordnetze
- K: Kraftfahrzeug

## Patentansprüche

1. Bremssteuersystem für ein Kraftfahrzeug (K), wobei
- das Bremssteuersystem (BS) ein erstes Steuergerät (SG1) zur Steuerung eines ersten Bremsaktuators (B1) des Kraftfahrzeugs (K) aufweist; und
- das Bremssteuersystem (BS) ein zweites Steuergerät (SG2) zur Steuerung eines zweiten Bremsaktuators (B2) des Kraftfahrzeugs (K) aufweist;
- das Bremssteuersystem (BS) ein drittes Steuergerät (SG3) zur Steuerung des ersten Bremsaktuators (B1) und des zweiten Bremsaktuators (B2) aufweist; und
- das Bremssteuersystem (BS) eine Schalteinrichtung (SE) aufweist, die dazu eingerichtet ist, das dritte Steuergerät (SG3) abhängig von einem Fehlerstatus des Bremssteuersystems (BS) mit dem ersten Bremsaktuator (B1) und/oder mit dem zweiten Bremsaktuator (B2) zu verbinden;
- die Schalteinrichtung (SE) dazu eingerichtet ist, abhängig von dem Fehlerstatus das erste Steuergerät (SG1) mit dem ersten Bremsaktuator (B1) zu verbinden; und/oder
- die Schalteinrichtung (SE) dazu eingerichtet ist, abhängig von dem Fehlerstatus das
zweite Steuergerät (SG2) mit dem zweiten Bremsaktuator (B2) zu verbinden; und **dadurch gekennzeichnet, dass**
- die Schalteinrichtung (SE) ein erstes Schaltelement (S1) zum Verbinden des ersten Steuergeräts (SG1) mit dem ersten Bremsaktuator (B1), ein zweites Schaltelement (S2) zum Verbinden des dritten Steuergeräts (SG3) mit dem ersten Bremsaktuator (B1), ein drittes Schaltelement (S3) zum Verbinden des dritten Steuergeräts (SG3) mit dem zweiten Bremsaktuator (B2) und ein viertes Schaltelement (S4) zum Verbinden des zweiten Steuergeräts (SG2) mit dem zweiten Bremsaktuator (B2) aufweist.

2. Bremssteuersystem nach Anspruch 1,
**dadurch gekennzeichnet, dass**
- das erste Steuergerät (SG1) zur Spannungsversorgung mit einem ersten Bordnetz (BN1) des Kraftfahrzeugs (K) verbindbar ist;
- das zweite Steuergerät (SG2) zur Spannungsversorgung mit einem zweiten Bordnetz (BN2) des Kraftfahrzeugs (K) verbindbar ist; und
- das dritte Steuergerät (SG3) zur Spannungsversorgung mit dem ersten und dem zweiten Bordnetz (BN1, BN2) verbindbar ist.

3. Bremssteuersystem nach einem der Ansprüche 1 oder 2,
**dadurch gekennzeichnet, dass**
das dritte Steuergerät (SG3) zur Spannungsversorgung mit einem dritten Bordnetz (BN3) des Kraftfahrzeugs (K) verbindbar ist.

4. Bremssteuersystem nach einem der Ansprüche 1 bis 3,
**dadurch gekennzeichnet, dass**
- das erste Steuergerät (SG1) mit einem weiteren ersten Bremsaktuator (A1) des Kraftfahrzeugs (K) verbindbar und dazu eingerichtet ist, den weiteren ersten Bremsaktuator (A1) zu steuern; und/oder
- das zweite Steuergerät (SG2) mit einem weiteren zweiten Bremsaktuator (A2) des Kraftfahrzeugs (K) verbindbar und dazu eingerichtet ist, den weiteren zweiten Bremsaktuator (A2) zu steuern.

5. Bremssteuersystem nach einem der Ansprüche 1 bis 4,
**dadurch gekennzeichnet, dass**
- das erste Steuergerät (SG1) oder das zweite Steuergerät (SG2) oder das dritte Steuergerät (SG3) oder ein viertes Steuergerät (SG4) des Bremssteuersystems (BS) als Schaltsteuergerät ausgebildet ist; und
- das Schaltsteuergerät mit der Schalteinrichtung (SE) gekoppelt und dazu eingerichtet ist, die Schalteinrichtung (SE) abhängig von dem Fehlerstatus anzusteuern, um das dritte Steuergerät (SG3) mit dem ersten Bremsaktuator und/oder mit dem zweiten Bremsaktuator zu verbinden.

6. Bremssteuersystem nach einem der Ansprüche 1 bis 5,
**dadurch gekennzeichnet, dass**
das erste Steuergerät (SG1), das zweite Steuergerät (SG2) und das dritte Steuergerät (SG3) mit einem Datenübertragungssystem (D) des Kraftfahrzeugs (K) verbindbar sind, um jeweilige Steuerbefehle zur Steuerung des ersten und/oder des zweiten Bremsaktuators (B1, B2) zu erhalten.

7. Bremssteuersystem nach einem der Ansprüche 1 bis 6,
**dadurch gekennzeichnet, dass**
- das Bremssteuersystem (BS) den ersten und den zweiten Bremsaktuator (B1, B2) beinhaltet;
- das erste Steuergerät (SG1) und das dritte Steuergerät (SG3) jeweils über die Schalteinrichtung (SE) mit dem ersten Bremsaktuator (B1) verbunden sind; und
- das zweite Steuergerät (SG2) und das dritte Steuergerät (SG3) jeweils über die Schalteinrichtung (SE) mit dem zweiten Bremsaktuator (B2) verbunden sind.

8. Kraftfahrzeug mit einem Bremssteuersystem (BS) nach einem der Ansprüche 1 bis 7.

## Claims

1. A brake control system for a motor vehicle (K), wherein
- the brake control system (BS) has a first control unit (SG1) for controlling a first brake actuator (B1) of the motor vehicle (K); and
- the brake control system (BS) has a second control unit (SG2) for controlling a second brake actuator (B2) of the motor vehicle (K);
- the brake control system (BS) has a third control unit (SG3) for controlling the first brake actuator (B1) and the second brake actuator (B2); and
- the brake control system (BS) has a switching device (SE), which is configured to connect the third control unit (SG3) to the first brake actuator (B1) and/or to the second brake actuator (B2) depending on a fault status of the brake control system (BS);
- the switching device (SE) is configured to connect the first control unit (SG1) to the first brake actuator (B1) depending on the fault status; and/or
- the switching device (SE) is configured to connect the second control unit (SG2) to the second brake actuator (B2) depending on the fault status; and
**characterized in that**
- the switching device (SE) has a first switching element (S1) for connecting the first control unit (SG1) to the first brake actuator (B1), a second switching element (S2) for connecting the third control unit (SG3) to the first brake actuator (B1), a third switching element (S3) for connecting the third control unit (SG3) to the second brake actuator (B2), and a fourth switching element (S4) for connecting the second control unit (SG2) to the second brake actuator (B2).

2. The brake control system according to claim 1,
**characterized in that**
- the first control unit (SG1) can be connected to a first on-board electrical system (BN1) of the motor vehicle (K) for voltage supply;
- the second control unit (SG2) can be connected to a second on-board electrical system (BN2) of the motor vehicle (K) for voltage supply; and
- the third control unit (SG3) can be connected to the first and the second on-board electrical system (BN1, BN2) for voltage supply.

3. The brake control system according to one of claims 1 or 2,
**characterized in that**
the third control unit (SG3) can be connected to a third on-board electrical system (BN3) of the motor vehicle (K) for voltage supply.

4. The brake control system according to one of claims 1 to 3,
**characterized in that**
- the first control unit (SG1) can be connected to an additional first brake actuator (A1) of the motor vehicle (K) and is configured to control the additional first brake actuator (A1); and/or
- the second control unit (SG2) can be connected to an additional second brake actuator (A2) of the motor vehicle (K) and is configured to control the additional second brake actuator (A2).

5. The brake control system according to one of claims 1 to 4,
**characterized in that**
- the first control unit (SG1) or the second control unit (SG2) or the third control unit (SG3) or a fourth control unit (SG4) of the brake control system (BS) is configured as a switching control unit; and
- the switching control unit is coupled to the switching device (SE) and is configured to control the switching device (SE) depending on the fault status, in order to connect the third control unit (SG3) to the first brake actuator and/or to the second brake actuator.

6. The brake control system according to one of claims 1 to 5,
**characterized in that**
the first control unit (SG1), the second control unit (SG2) and the third control unit (SG3) can be connected to a data transmission system (D) of the motor vehicle (K), in order to obtain respective control commands for controlling the first and/or second brake actuators (B1, B2).

7. The brake control system according to one of claims 1 to 6,
**characterized in that**
- the brake control system (BS) includes the first and second brake actuators (B1, B2);
- the first control unit (SG1) and the third control unit (SG3) are each connected to the first brake actuator (B1) via the switching device (SE); and
- the second control unit (SG2) and the third control unit (SG3) are each connected to the second brake actuator (B2) via the switching device (SE).

8. A motor vehicle having a brake control system (BS) according to one of claims 1 to 7.

## Revendications

1. Système de commande de frein pour un véhicule automobile (K), dans lequel
- le système de commande de frein (BS) présente un premier appareil de commande (SG1) pour la commande d'un premier actionneur de frein (B1) du véhicule automobile (K) ; et
- le système de commande de frein (BS) présente un deuxième appareil de commande (SG2) pour la commande d'un deuxième actionneur de frein (B2) du véhicule automobile (K) ;
- le système de commande de frein (BS) présente un troisième appareil de commande (SG3) pour la commande du premier actionneur de frein (B1) et du deuxième actionneur de frein (B2) ; et
- le système de commande de frein (BS) présente un dispositif de commutation (SE), qui est conçu pour connecter le troisième appareil de commande (SG3) au premier actionneur de frein (B1) et/ou au deuxième actionneur de frein (B2) en fonction d'un état d'erreur du système de commande de frein (BS) ;
- le dispositif de commutation (SE) est conçu pour connecter le premier appareil de commande (SG1) au premier actionneur de frein (B1) en fonction de l'état d'erreur ; et/ou
- le dispositif de commutation (SE) est conçu pour connecter le deuxième appareil de commande (SG2) au deuxième actionneur de frein (B2) en fonction de l'état d'erreur ; et
**caractérisé en ce que**
- le dispositif de commutation (SE) présente un premier élément de commutation (S1) pour la connexion du premier appareil de commande (SG1) au premier actionneur de frein (B1), un deuxième élément de commutation (S2) pour la connexion du troisième appareil de commutation (SG3) au premier actionneur de frein (B1), un troisième élément de commutation (S3) pour la connexion du troisième appareil de commande (SG3) au deuxième actionneur de frein (B2) et un quatrième élément de commutation (S4) pour la connexion du deuxième appareil de commande (SG2) au deuxième actionneur de frein (B2).

2. Système de commande de frein selon la revendication 1,
**caractérisé en ce que**
- le premier appareil de commande (SG1) peut être connecté à un premier réseau de bord (BN1) du véhicule automobile (K) pour l'alimentation en tension ;
- le deuxième appareil de commande (SG2) peut être connecté à un deuxième réseau de bord (BN2) du véhicule automobile (K) pour l'alimentation en tension ; et
- le troisième appareil de commande (SG3) peut être connecté au premier et au deuxième réseau de bord (BN1, BN2) pour l'alimentation en tension.

3. Système de commande de frein selon l'une quelconque des revendications 1 ou 2,
**caractérisé en ce que**
le troisième appareil de commande (SG3) peut être connecté à un troisième réseau de bord (BN3) du véhicule automobile (K) pour l'alimentation en tension.

4. Système de commande de frein selon l'une quelconque des revendications 1 à 3,
**caractérisé en ce que**
- le premier appareil de commande (SG1) peut être connecté à un autre premier actionneur de frein (A1) du véhicule automobile (K) et est conçu pour commander l'autre premier actionneur de frein (A1) ; et/ou
- le deuxième appareil de commande (SG2) peut être connecté à un autre deuxième actionneur de frein (A2) du véhicule automobile (K) et est conçu pour commander l'autre deuxième actionneur de frein (A2).

5. Système de commande de frein selon l'une quelconque des revendications 1 à 4,
**caractérisé en ce que**
- le premier appareil de commande (SG1) ou le deuxième appareil de commande (SG2) ou le troisième appareil de commande (SG3) ou un quatrième appareil de commande (SG4) du système de commande de frein (BS) est conçu comme appareil de commande de commutation ; et
- l'appareil de commande de commutation est couplé au dispositif de commutation (SE) et est conçu pour commander le dispositif de commutation (SE) en fonction de l'état d'erreur, pour connecter le troisième appareil de commande (SG3) au premier actionneur de frein et/ou au deuxième actionneur de frein.

6. Système de commande de frein selon l'une quelconque des revendications 1 à 5,
**caractérisé en ce que**
le premier appareil de commande (SG1), le deuxième appareil de commande (SG2) et le troisième appareil de commande (SG3) peuvent être connectés à un système de transmission de données (D) du véhicule automobile (K), pour obtenir des commandes respectives pour la commande du premier et/ou du deuxième actionneur de frein (B1, B2).

7. Système de commande de frein selon l'une quelconque des revendications 1 à 6,
**caractérisé en ce que**
- le système de commande de frein (BS) contient le premier et le deuxième actionneur de frein (B1, B2) ;
- le premier appareil de commande (SG1) et le troisième appareil de commande (SG3) sont connectés respectivement au premier actionneur de frein (B1) à travers le dispositif de commutation (SE) ; et
- le deuxième appareil de commande (SG2) et le troisième appareil de commande (SG3) sont connectés respectivement au deuxième actionneur de frein (B2) à travers le dispositif de commutation (SE).

8. Véhicule automobile comprenant un système de commande de frein (BS) selon l'une quelconque des revendications 1 à 7.
